# EUROPÄISCHE PATENTSCHRIFT

(11) **EP 1 356 223 B1**
(45) Veröffentlichungstag und Bekanntmachung des Hinweises auf die Patenterteilung: **11.03.2009**
(21) Anmeldenummer: 01989467.4
(22) Anmeldetag: 14.11.2001
(51) Int. Cl.: F16L 1/00

(54) **SCHALENKUPPLUNG FÜR ROHRE**
CLAMP COUPLING FOR PIPES
ACCOUPLEMENT A COQUILLE POUR CONDUITS

(30) Priorität: 17.11.2000 DE 10057304
(43) Veröffentlichungstag der Anmeldung: 29.10.2003
(73) Patentinhaber: Putzmeister Concrete Pumps GmbH, 72631 Aichtal (DE)
(72) Erfinder: MÄCKLE, Raimund, 73730 Esslingen (DE); JUNGHANS, Karl-Heinz, 70794 Filderstadt (DE)
(74) Vertreter: Wolf, Eckhard
(86) Internationale Anmeldenummer: PCT/EP2001/013154
(87) Internationale Veröffentlichungsnummer: WO 2002/040908

(56) Entgegenhaltungen:
- DE-A- 2 550 825
- DE-B- 1 186 284
- DE-C- 931 727
- DE-U- 7 229 511
- GB-A- 2 066 405
- US-A- 2 543 589
- US-A- 3 379 460

## Beschreibung

Die Erfindung betrifft eine Schalenkupplung zum paarweisen Kuppeln von an in ihren einander zugewandten Enden mit einem im wesentlichen radial überstehenden Kupplungsflansch versehenen Rohren, mit zwei im Kupplungszustand eine Kreisöffnung für den Rohrdurchtritt begrenzenden Kupplungsschalen, die an ihrem einen Ende über ein außenliegendes Gelenk um eine zur Kreisöffnung achsparallele Gelenkachse gegeneinander verschwenkbar sind und von denen die erste Kupplungsschale an ihrem dem Gelenk gegenüberliegenden Ende einen radial nach außen überstehenden Stützbock und die zweite Kupplungsschale an ihrem dem Gelenk gegenüberliegenden Ende einen mit dem Stützbock zusammenwirkenden Schließmechanismus aufweist, wobei der Schließmechanismus einen in der Schließstellung den Stützbock formschlüssig umfassenden und die Kupplungsschalen an ihrer dem Gelenk gegenüberliegenden Trennstelle gegeneinanderziehendenden Schließhaken aufweist, der beim Öffnungsvorgang vom Stützbock abhebbar ist.

Schalenkupplungen dieser Art werden vor allem in Betonförderleitungen als Rohrkupplungen eingesetzt. Wegen der dort auftretenden hohen Förderdrücke ist eine stabile Verbindung und eine gute Abdichtung im Kupplungsbereich erforderlich. Es ist eine Schalenkupplung bekannt (DE-U-72 29 511), bei welcher der Schließmechanismus einen am Stützbock abstützbaren als Spannhebel ausgebildeten Schließhaken aufweist, der um eine zur Kreisöffnung achsparallele Achse begrenzt von einer Offenstellung in eine gegen die Außenfläche der den Stützbock aufweisenden Kupplungsschale anliegende Spannstellung verschwenkbar ist. Eine solche Schalenkupplung kann an schwer zugänglichen Stellen in beengten Räumen wegen des mit achsparallel zur Kreisöffnung um mehr als 90° zu verschwenkenden Spannhebels oft nicht eingesetzt werden.

Weiter ist es bei einer Kupplung für eine zweiteilige Ventilanordnung an sich bekannt (US-A 2,543,589) zwei koaxial zueinander angeordnete Ventilteile mit Hilfe eines Schließmechanismus zu verbinden, der am einen Ventilteil zwei radial nach außen überstehende Stützböcke sowie je einen am anderen Ventilteil angeordneten, mit einem der Stützböcke zusammenwirkenden Schließmechanismus aufweist, wobei der Schließmechanismus einen in der Schließstellung den zugehörigen Stützbock formschlüssig umfassenden, die beiden Ventilteile an einer Trennstelle gegeneinander ziehenden Schließhaken aufweist, der beim Öffnungsvorgang vom Stützbock abhebbar und um eine zur Gelenkachse senkrechte Schwenkachse aus dessen Wirkungsbereich herausschenkbar ist und der zusätzlich einen mit dem Schließhaken zusammenwirkenden Spannhebel aufweist, in dessen Spannstellung der Schließhaken gegen den Stützbock anliegt und in dessen Lösestellung der Schließhaken unter Freigabe seines Schwenkwegs vom Stützbock abgehoben ist. Um eine sichere axiale Verbindung herstellen zu können, sind dort zwei Stützböcke und Schließmechanismen erforderlich, deren Wirkung nicht ohne weiteres auf eine Schalenkupplung im Sinne der Erfindung übertragbar ist.

Ausgehend hiervon liegt der Erfindung die Aufgabe zugrunde, eine Schalenkupplung der eingangs angegebenen Art zu entwickeln, die auch an schwer zugänglichen Stellen in beengten Räumen eingesetzt werden kann.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, daß der Schließmechanismus der Schalenkupplung dann einen geringen Platzbedarf aufweist, wenn dessen verschwenkbaren Teile nicht um zur Rohrachse parallele, sondern quer zu dieser verlaufende Achsen verschwenkbar sind. Um dies zu erreichen, wird gemäß der Erfindung vorgeschlagen, daß der Schließhaken beim Öffnungsvorgang vom Stützbock um eine zur Gelenkachse und damit auch zur Rohrachse senkrechte Schwenkachse aus dem Wirkungsbereich des Stützbocks herausschwenkbar ist. Gemäß einer bevorzugten Ausgestaltung der Erfindung weist der Schließmechanismus zusätzlich einen mit dem Schließhaken zusammenwirkenden, um eine zur Gelenkachse senkrechte Hebelachse verschwenkbaren Spannhebel auf, in dessen Spannstellung der Schließhaken gegen den Stützbock anliegt und in dessen Lösestellung der Schließhaken unter Freigabe seines Schwenkwegs vom Stützbock abgehoben ist.

Eine weitere bevorzugte Ausgestaltung der Erfindung sieht vor, daß der Spannhebel als Exzenterhebel ausgebildet ist, der um eine an der zweiten Kupplungsschale angeordnete, zur Gelenkachse senkrechte Hebelachse verschwenkbar ist, und der eine in eine zur Schwenkachse konzentrische Lagerbohrung des Schließhakens eingreifende, zur Hebelachse exzentrische Exzenterwelle aufweist. Der Spannhebel weist hierzu zweckmäßig eine zur Mantelfläche der Exzenterwelle exzentrische Lagerbohrung auf, mit der er an einem die Hebelachse bildenden, an der zweiten Kupplungsschale angeordneten Lagerzapfen gelagert ist.

Der Stützbock, gegen den der Schließhaken in der Schließstellung anliegt, wird zweckmäßig als zylindrischer oder teilzylindrischer Zapfen ausgebildet.

Um eine Sicherung der Kupplung im Schließzustand zu ermöglichen, wird gemäß einer weiteren vorteilhaften Weiterbildung der Erfindung vorgeschlagen, daß die schwenkbaren Teile und die mit der zweiten Kupplungsschale starr verbundenen Teile des Schließmechanismus mit Riegelbohrungen versehen sind, die in der Schließstellung des Schließmechanismus zur Aufnahme eines Steckriegels miteinander fluchten. Der Steckriegel kann dabei mit einem Federschenkel als zusätzliches Arretierungsorgan versehen sein.

Weiter wird gemäß der Erfindung vorgeschlagen, daß die schwenkbaren Teile des Schließmechanismus am zugehörigen Lagerzapfen verschiebefest gesichert sind.

Im folgenden wird die Erfindung anhand eines in der Zeichnung in schematischer Weise dargestellten Ausführungsbeispiels näher erläutert. Es zeigen
- Fig. 1a: eine schaubildliche Darstellung einer Schalenkupplung für Rohre im Schließzustand;
- Fig. 1b, c und d: drei Seitenansichten der Schalenkupplung nach Fig. 1a;
- Fig. 2a bis d: die Schalenkupplung nach Fig. 1a in verschiedenen Stel- lungen des Schließmechanismus während des Öffnungs- und Schließvorgangs jeweils in schaubildlicher Darstellung;
- Fig. 3a bis: d eine Draufsicht auf den Schließmechanismus der Schalen- kupplung in den Öffnungsstellungen gemäß Fig. 2a bis f;

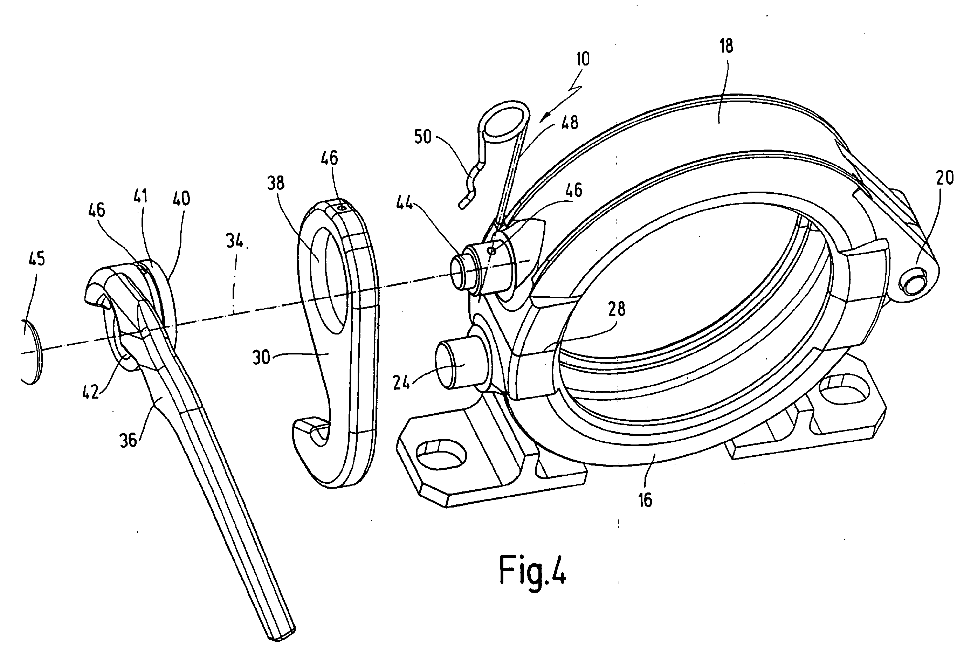

- Fig. 4: eine schaubildliche Explosionsdarstellung der Schalen- kupplung;

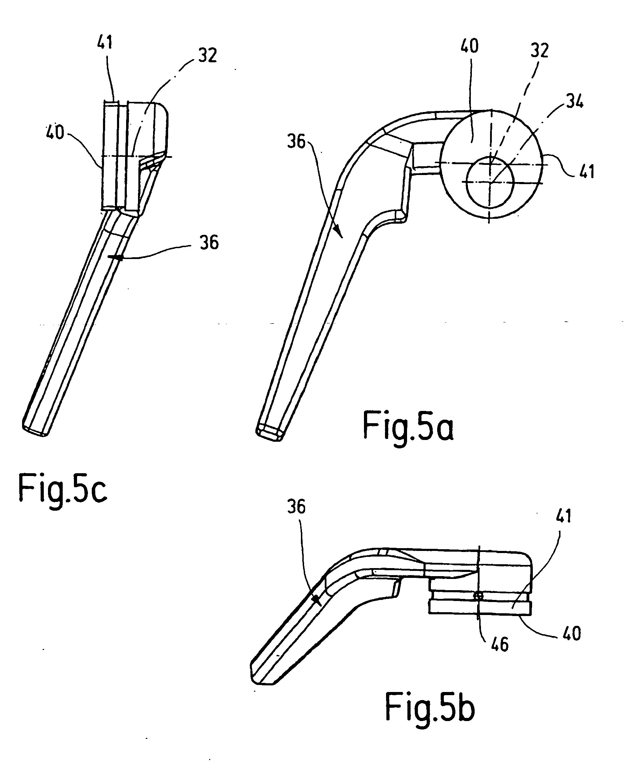

- Fig. 5a bis c: drei verschiedene Ansichten des Spannhebels.

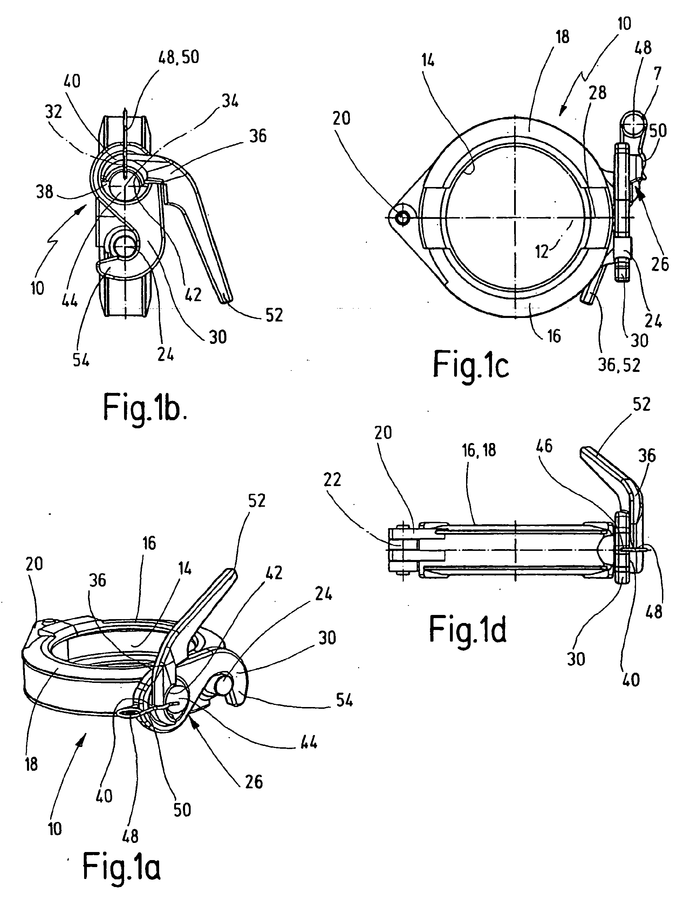

Die in der Zeichnung dargestellte Schalenkupplung ist zur Verbindung von Rohrleitungen bestimmt. Sie wird beispielsweise zur Verbindung zweier nicht dargestellter Rohrleitungen einer Druckförderleitung für Dickstoffe verwendet und wird dort wegen des geringen Platzbedarfs vor allem an schwer zugänglichen Stellen eingesetzt. Die Schalenkupplung 10 weist zwei im wesentlichen spiegelsymmetrisch zu einer Trennebene 12 angeordnete, in dem in Fig. 1c gezeigten Kupplungszustand eine Kreisöffnung 14 für den Rohrdurchtritt begrenzende Kupplungsschalen 16,18 auf. Die Kupplungsschalen 16,18 sind an ihrem einen Ende über ein außenliegendes Gelenk 20 um eine zur Kreisöffnung 14 parallele, in der Trennebene 12 liegende Achse 22 gegeneinander verschwenkbar. An ihrem dem Gelenk (20) gegenüberliegenden Ende weist die erste Kupplungsschale 16 einen radial nach außen überstehenden, als Zylinderzapfen ausgebildeten Stützbock 24 und die zweite Kupplungsschale 18 einen mit dem Stützbock 24 zusammenwirkenden Schließmechanismus 26 auf. Der Schließmechanismus 26 umfaßt einen in der Schließstellung den Stützbock 24 formschlüssig umfassenden und die Kupplungsschalen an ihrer dem Gelenk 20 gegenüberliegenden Trennstelle 28 gegeneinanderziehenden Schließhaken 30, der beim Öffnungsvorgang vom Stützbock 24 abhebbar und um eine zur Gelenkachse 22 senkrechte Schwenkachse 32 aus dessen Wirkungsbereich herausschwenkbar ist. Weiter weist der Schließmechanismus einen mit dem Schließhaken 30 zusammenwirkenden, um eine zur Gelenkachse 22 senkrechte Hebelachse 34 verschwenkbaren Spannhebel 36 auf, in dessen Spannstellung der Schließhaken 30 gegen den Stützbock 24 anliegt und in dessen Lösestellung der Schließhaken unter Freigabe seines Schwenkwegs vom Stützbock 24 abgehoben ist. Der Spannhebel 36 ist dabei als Exzenterhebel ausgebildet, der um eine an der zweiten Kupplungsschale 18 angeordnete, zur Gelenkachse 22 senkrechte Hebelachse 34 verschwenkbar ist und der eine in eine zur Schwenkachse 32 koaxiale Lagerbohrung 38 eingreifenden, zur Hebelachse exzentrische Exzenterwelle 40 aufweist. Außerdem weist der Spannhebel 36 eine zur Mantelfläche 41 der Exzenterwelle 40 exzentrische Lagerbohrung 42 auf, mit der er an einem über die zweite Kupplungsschale 18 überstehenden, die Hebelachse 34 bildenden Lagerzapfen 44 gelagert ist. Stirnseitig ist der Schließmechanismus durch eine auf den Lagerzapfen 44 aufsteckbare Lagerkappe 45 gesichert.

Um die Schalenkupplung 10 im Schließzustand gegen ein versehentliches Öffnen sichern zu können, sind die schwenkbaren Teile 30,36 und die mit der zweiten Kupplungsschale 18 starr verbundenen Teile 44 des Schließmechanismus 26 mit Riegelbohrungen 46 versehen, die in der Schließstellung des Schließmechanismus 26 zur Aufnahme eines Steckriegels 48 miteinander fluchten. Als zusätzliches Arretierungsorgan weist der Steckriegel 48 einen Federschenkel 50 auf, mit dem er unter Federspannung gegen den Schließmechanismus abgestützt ist (vgl. Fig. 1a bis d).

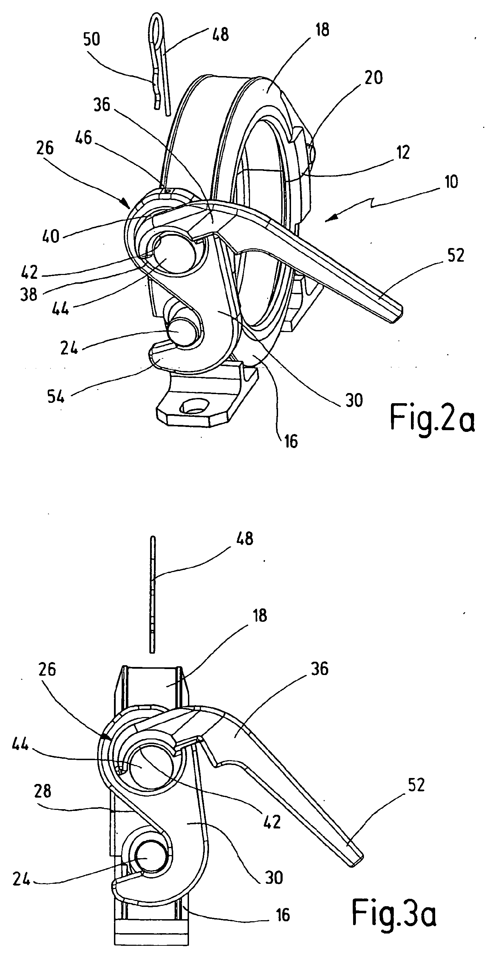

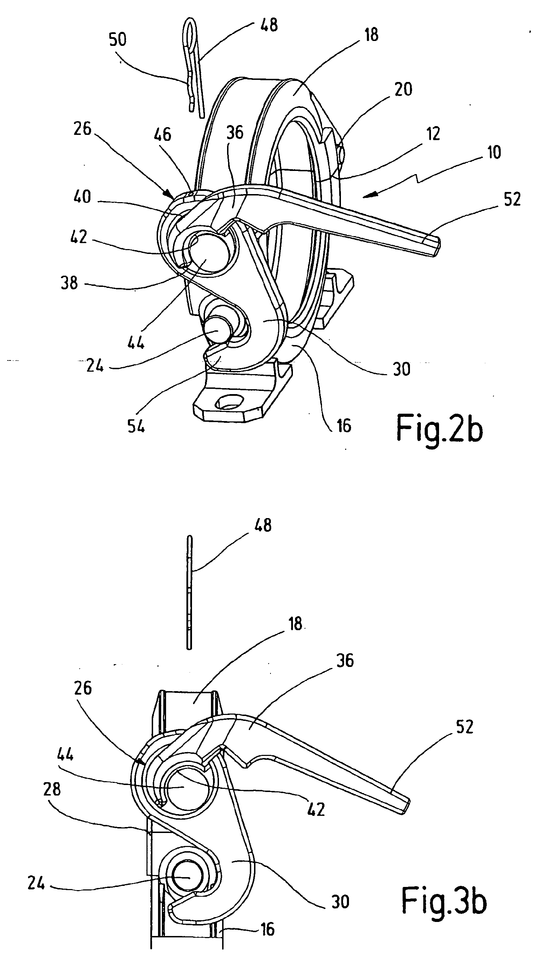

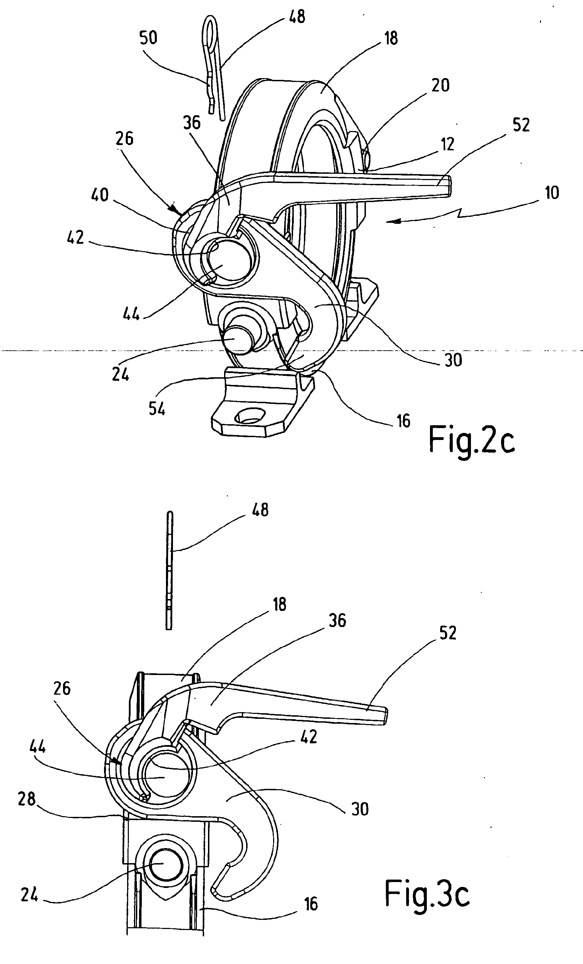

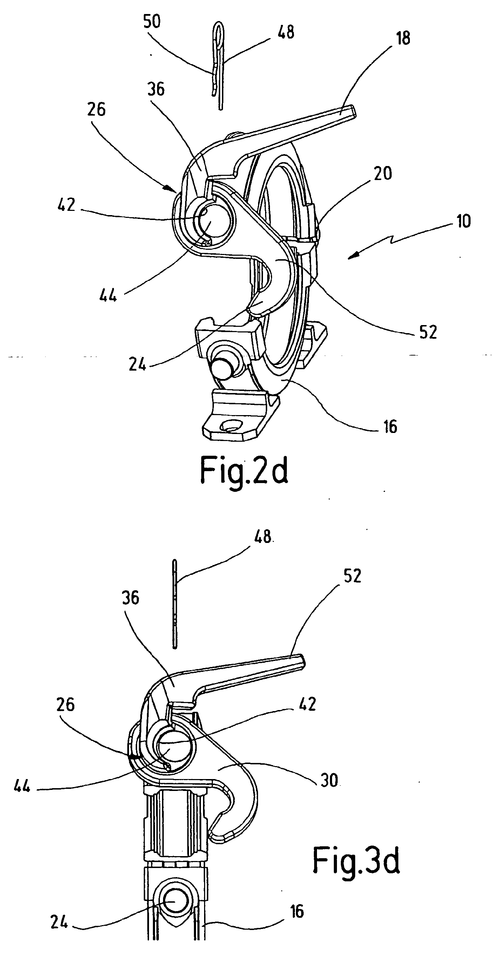

Zum Öffnen der Schalenkupplung wird zunächst der Steckriegel 48 aus den Riegelbohrungen 46 herausgezogen (Fig. 2a bis d, 3a bis d). Sodann wird der Spannhebel 36 an seinem Hebelarm 52 von Hand erfaßt und aus seiner Verriegelungsstellung aus angehoben. Dabei gelangt er in die in den Fig. 2a bis d sowie 3a bis d gezeigten Stellungen. Aufgrund der Exzenterbewegung der Exzenterscheibe 60 in der Lagerbohrung 38 wird zunächst der Schließhaken 30 insgesamt abgesenkt, bis sein Hakenteil 54 sich ausreichend vom Stützbock 24 abgehoben hat (Fig. 2b, 3b). Beim weiteren Anheben des Hebelarms 52 gelangt der Schließhaken 30 mit seinem Hakenteil 54 aus dem Wirkungsbereich des Stützbocks 24 heraus (Fig. 2c, 3c), so daß die Kupplungsschalen 16,18 durch Verschwenken um die Gelenkachse 22 an ihrer Trennstelle 28 voneinander abgehoben werden können (Fig. 2d, 3d). In diesem Zustand können die miteinander zu verbindenden Rohre mit ihren einander zugewandten Endflanschen in die Schalenkupplung eingelegt werden. Der Schließvorgang der Schalenkupplung läuft dann in umgekehrter Reihenfolge ab (Fig. 2d bis 2a, Fig. 1a).

Zusammenfassend ist folgendes festzuhalten: Die Erfindung bezieht sich auf eine Schalenkupplung zum paarweisen Kuppeln von Rohren. Schalenkupplungen dieser Art werden beispielsweise zum Kuppeln von Betonleitungen von Betonpumpen eingesetzt. Die Schalenkupplung 10 weist zwei im Kupplungszustand eine Kreisöffnung 14 für den Rohrdurchtritt begrenzende Kupplungsschalen 16, 18 auf, die an ihrem einen Ende über ein außenliegendes Gelenk 20 gegeneinander verschwenkbar sind und die an ihrem anderen Ende einen Schließmechanismus 26 aufweisen. Um die Schalenkupplung 10 auch in beengten Räumen einsetzen zu können, weist der Schließmechanismus 26 einen Schließhaken 30 auf, der in der Schließstellung einen Stützbock 24 an der anderen Kupplungsschale 16 formschlüssig umfaßt und die Kupplungsschalen 16, 18 an ihrer dem Gelenk 20 gegenüberliegenden Trennstelle 28 gegeneinander zieht. Beim Öffnungsvorgang ist der Schließhaken 30 vom Stützbock 24 abhebbar und um eine zur Gelenkachse 22 senkrechte Schwenkachse 32 aus dessen Wirkungsbereich herausschwenkbar. Der Schließmechanismus 26 enthält zusätzlich einen Spannhebel 36, der um eine zur Gelenkachse senkrechte Hebelachse 34 gegenüber der Kupplungsschale 18 verschwenkbar ist und mit dem Schließhaken 30 zusammenwirkt.

## Patentansprüche

1. Schalenkupplung zum paarweisen Kuppeln von an ihren einander zugewandten Enden mit im wesentlichen radial überstehenden Kupplungsflanschen versehenen Rohren, mit zwei im Kupplungszustand eine Kreisöffnung (14) für den Rohrdurchtritt begrenzenden Kupplungsschalen (16, 18), die an ihrem einen Ende über ein außenliegendes Gelenk (20) um eine zur Kreisöffnung (14) achsparallele Gelenkachse (22) gegeneinander verschwenkbar sind, und von denen die erste Kupplungsschale (16) an ihrem dem Gelenk (20) gegenüberliegenden Ende einen radial nach außen überstehenden Stützbock (24) und die zweite Kupplungsschale (18) an ihrem dem Gelenk gegenüberliegenden Ende einen mit dem Stützbock (24) zusammenwirkenden Schließmechanismus (26) aufweist, wobei der Schließmechanismus (26) einen in der Schließstellung den Stützbock (24) formschlüssig umfassenden und die Kupplungsschalen (16, 18) an ihrer dem Gelenk (20) gegenüberliegenden Trennstelle (28) gegeneinanderziehenden Schließhaken (30) aufweist, der beim Öffnungsvorgang vom Stützbock (24) abhebbar ist, **dadurch gekennzeichnet, dass** der Schließhaken (30) beim Öffnungsvorgang um eine zur Gelenkachse (22) senkrechte Schwenkachse (32) aus dem Wirkungsbereich des Stützbocks (24) herausschwenkbar ist.

2. Schalenkupplung nach Anspruch 1, **dadurch gekennzeichnet, daß** der Schließmechanismus (26) zusätzlich einen mit dem Schließhaken (30) zusammenwirkenden, um eine zur Gelenkachse (22) senkrechte Hebelachse (34) verschwenkbaren Spannhebel (36) aufweist, in dessen Spannstellung der Schließhaken (30) gegen den Stützbock (24) anliegt und in dessen Lösestellung der Schließhaken (32) unter Freigabe seines Schwenkwegs vom Stützbock (24) abgehoben ist.

3. Schalenkupplung nach Anspruch 2, **dadurch gekennzeichnet, daß** der Spannhebel (36) als Exzenterhebel ausgebildet ist, der um eine an der zweiten Kupplungsschale (18) angeordnete, zur Gelenkachse (22) senkrechte Hebelachse (34) verschwenkbar ist, und der eine in eine zur Schwenkachse (32) konzentrische Lagerbohrung (38) des Schließhakens (30) eingreifende, zur Hebelachse (34) exzentrische Exzenterwelle (40) aufweist.

4. Schalenkupplung nach Anspruch 3, **dadurch gekennzeichnet, daß** der Spannhebel (36) eine zur Mantelfläche (41) der Exzenterwelle (40) exzentrische Lagerbohrung (42) aufweist, mit der er an einem über die zweite Kupplungsschale (18) überstehenden, die Hebelachse (34) bildenden Lagerzapfen (44) gelagert ist.

5. Schalenkupplung nach einem der Ansprüche 1 bis 4, **dadurch gekennzeichnet, daß** der Stützbock (24) als zylindrischer oder teilzylindrischer Zapfen ausgebildet ist.

6. Schalenkupplung nach einem der Ansprüche 1 bis 5, **dadurch gekennzeichnet, daß** die schwenkbaren Teile (30,36) und die mit der zweiten Kupplungsschale (18) starr verbundenen Teile (44) des Schließmechanismus (26) mit Riegelbohrungen (46) versehen sind, die in der Schließstellung des Schließmechanismus (26) zur Aufnahme eines Steckriegels (48) miteinander fluchten.

7. Schalenkupplung nach Anspruch 6, **dadurch gekennzeichnet, daß** der Steckriegel (48) einen Federschenkel (50) als zusätzliches Arretierungsorgan aufweist.

8. Schalenkupplung nach einem der Ansprüche 1 bis 7, **dadurch gekennzeichnet, daß** die schwenkbaren Teile (30,36) des Schließmechanismus (20) am Lagerzapfen (44) verschiebefest gesichert sind.

## Claims

1. Clamp coupling for the paired coupling of pipes provided at their ends facing one another with essentially radially projecting coupling flanges, with two coupling shells (16, 18) which, in the coupling state, delimit a circular orifice (14) for the pipe passage and which at one end are pivotable with respect to one another via an external joint (20) about an axis of articulation (22) axially parallel to the circular orifice (14), and of which the first coupling shell (16) has, at its end lying opposite the joint (20), a radially outward-projecting supporting bearer (24) and the second coupling shell (18) has, at its end lying opposite the joint, a closing mechanism (26) cooperating with the supporting bearer (24), the closing mechanism (26) having a closing hook (30) which, in the closing position, surrounds the supporting bearer (24) positively and pulls the coupling shells (16, 18) towards one another at their separation point (28) lying opposite the joint (20) and which can be lifted off from the supporting bearer (24) during the opening operation, **characterized in that**, during the opening operation, the closing hook (30) can be pivoted out of the effective range of the supporting bearer (24) about a pivot axis (32) perpendicular to the axis of articulation (22).

2. Clamp coupling according to Claim 1, **characterized in that** the closing mechanism (26) additionally has a tension lever (36) which cooperates with the closing hook (30) and is pivotable about a lever axis (34) perpendicular to the axis of articulation (22) and in the tension position of which the closing hook (30) bears against the supporting bearer (24) and in the release position of which the closing hook (32) is lifted off, enabling its pivoting travel, from the supporting bearer (24).

3. Clamp coupling according to Claim 2, **characterized in that** the tension lever (36) is designed as an eccentric lever which is pivotable about a lever axis (34) arranged on the second coupling shell (18) and perpendicular to the axis of articulation (22) and which has an eccentric shaft (40) which engages into a bearing bore (38), concentric to the pivot axis (32), of the closing hook (30) and which is eccentric to the lever axis (34).

4. Clamp coupling according to Claim 3, **characterized in that** the tension lever (36) has a bearing bore (42) which is eccentric to the surface area (41) of the eccentric shaft (40) and by means of which the said tension lever is mounted on a bearing journal (44) projecting beyond the second coupling shell (18) and forming the lever axis (34).

5. Clamp coupling according to one of Claims 1 to 4, **characterized in that** the supporting bearer (24) is designed as a cylindrical or partially cylindrical journal.

6. Clamp coupling according to one of Claims 1 to 5, **characterized in that** the pivotable parts (30, 36) and the parts (44) of the closing mechanism (26) which are connected rigidly to the second coupling shell (18) are provided with bolt bores (46) which, in the closing position of the closing mechanism (26), are in alignment with one another in order to receive a socket bolt (48).

7. Clamp coupling according to Claim 6, **characterized in that** the socket bolt (48) has a spring leg (50) as an additional locking member.

8. Clamp coupling according to one of Claims 1 to 7, **characterized in that** the pivotable parts (30, 36) of the closing mechanism (20) are secured, fixedly in terms of displacement, to the bearing journal (44).

## Revendications

1. Accouplement à coquille pour accoupler par paire des conduits pourvus à leurs extrémités tournées l'une vers l'autre de brides d'accouplement saillant essentiellement radialement, comprenant deux coquilles d'accouplement (16, 18) limitant dans l'état accouplé une ouverture circulaire (14) pour le passage tubulaire, qui peuvent pivoter l'une par rapport à l'autre à l'une de leurs extrémités autour d'un axe d'articulation (22) parallèle à l'axe de l'ouverture circulaire (14) par le biais d'une articulation extérieure (20), et dont la première coquille d'accouplement (16) présente à son extrémité opposée à l'articulation (20) un bloc de support (24) saillant radialement vers l'extérieur, et dont la deuxième coquille d'accouplement (18) présente à son extrémité opposée à l'articulation un mécanisme de fermeture (26) coopérant avec le bloc de support (24), le mécanisme de fermeture (26) présentant un crochet de fermeture (30) entourant par correspondance géométrique dans la position de fermeture le bloc de support (24) et tirant l'une contre l'autre les coquilles d'accouplement (16, 18) au niveau de leur point de séparation (28) opposé à l'articulation (20), lequel peut être soulevé du bloc de support (24) lors de l'opération d'ouverture, **caractérisé en ce que** le crochet de fermeture (30), lors de l'opération d'ouverture, peut être pivoté autour d'un axe de pivotement (32) perpendiculaire l'axe d'articulation (22) hors de la région d'action du bloc de support (24).

2. Accouplement à coquille selon la revendication 1, **caractérisé en ce que** le mécanisme de fermeture (26) présente en outre un levier de serrage (36) coopérant avec le crochet de fermeture (30), pouvant pivoter par rapport à un axe de levier (34) perpendiculaire à l'axe d'articulation (22), dans la position de serrage duquel le crochet de fermeture (30) s'applique contre le bloc de support (24), et dans la position de libération duquel le crochet de fermeture (32) est soulevé du bloc de support (24) en libérant sa course de pivotement.

3. Accouplement à coquille selon la revendication 2, **caractérisé en ce que** le levier de serrage (36) est réalisé sous forme de levier excentré, qui peut pivoter autour d'un axe de levier (34) perpendiculaire à l'axe d'articulation (22), disposé sur la deuxième coquille d'accouplement (18), et qui présente un arbre excentré (40) excentré par rapport à l'axe de levier (34), et venant en prise dans un alésage de palier (38) du crochet de fermeture (30) concentrique à l'axe de pivotement (32).

4. Accouplement coquille selon la revendication 3, **caractérisé en ce que** le levier de serrage (36) présente un alésage de palier (42) excentré par rapport à la surface d'enveloppe (41) de l'arbre excentré (40), avec lequel il est monté sur un tourillon de palier (44) formant l'axe de levier (34) et dépassant au-delà de la deuxième coquille d'accouplement (18).

5. Accouplement à coquille selon l'une quelconque des revendications 1 à 4, **caractérisé en ce que** le bloc de support (24) est réalisé sous la forme d'un tourillon cylindrique ou partiellement cylindrique.

6. Accouplement à coquille selon l'une quelconque des revendications 1 à 5, **caractérisé en ce que** les parties pivotantes (30, 36) et les parties (44) du mécanisme de fermeture (26) connectées rigidement à la deuxième coquille d'accouplement (18) sont pourvues d'alésages de verrou (46), qui sont alignés les uns avec les autres dans la position de fermeture du mécanisme de fermeture (26) pour recevoir une verrou enfichable (48).

7. Accouplement à coquille selon la revendication 6, **caractérisé en ce que** le verrou enfichable (48) présente une branche élastique (50) servant d'organe de blocage supplémentaire.

8. Accouplement à coquille selon l'une quelconque des revendications 1 à 7, **caractérisé en ce que** les parties pivotantes (30, 36) du mécanisme de fermeture (20) sont fixées de manière non déplaçable sur le tourillon de palier (44).
